# EUROPEAN PATENT APPLICATION

(11) **EP 0 725 219 A1**
(43) Date of publication of application: **07.08.1996**
(21) Application number: 96300719.0
(22) Date of filing: 01.02.1996
(51) Int. Cl.: F16B 13/08

(54) **Anchoring device**

(30) Priority: 03.02.1995 GB 9521440
(71) Applicant: CCL SYSTEMS LIMITED, Leeds, West Yorkshire LS11 8BH (GB)
(72) Inventor: Kaznowski, Jan T., Baildon, West Yorkshire BD17 5LS (GB); Smith, Michael A., Wakefield WF4 4ST, West Yorkshire (GB); Howarth, Brian F., Pudsey, LS28 8LB, West Yorkshire (GB)
(74) Representative: Chugg, David John

(57) **Abstract**

The invention concerns an anchoring device for use in blind fixing applications. In a preferred embodiment, the device comprises an elongate member (1), and a collar (2) for pivotal engagement with the elongate member (1). The anchoring device may be utilised with standard equipment such as threaded bolts etc., and is configurable in either a closed configuration, in which the elongate member (1) lies substantially parallel with the bolt or like member (3) and an open configuration in which the bolt (3) engages with an internally threaded aperture (6) of the elongate member (1). Passage of the device from the closed configuration to the open configuration may be brought about automatically by providing the collar (2) with an outwardly extending tab of material (15) which, in the closed configuration, bears against the elongate member (1) so as to urge it towards the open configuration.

## Description

The invention relates to an anchoring device. In particular, the invention relates to an anchoring device which is particularly suitable for use with walls or other surfaces which permit access from one side only.

In many domestic and industrial situations, there is a need to fix a member such as a bolt or the like to a supporting surface to be able to attach objects to the member or to hang objects therefrom. With solid walls, one standard technique is to drill a hole and insert a plug which expands to fill the hole as a screw or the like is inserted into the plug. However, such devices are unsuitable for use with supporting surfaces having a cavity directly behind them.

There are various devices on the market which may be used for blind fixing applications. The majority of such devices rely upon a toggle plate which in a first (closed) configuration may be passed through an aperture in a wall, at which point it may be flipped down into a second (open) configuration so that the toggle plate having passed through the wall extends across the hole. Once in place, an external fitting may be used to lock the toggle plate in position and, in turn, to fix or hang objects thereon. In order to get such toggle plates into position, one of two mechanisms are commonly used. A first such mechanism relies upon a special two part bolt, one part being flexible the other part being rigid, the toggle plate being in the closed configuration aligned parallel with a main extent of the bolt by flexing the flexible portion so as to allow the toggle plate to pass through the hole, the flexible portion then acting to bring the toggle plate into its open configuration to block the hole and the bolt then being manipulated so as to run the toggle plate up onto the rigid part of the bolt. The second type of toggle plate device which does not feature a special two part bolt but has no automatic feature for springing the toggle plate into position, requires the use of some other guide means, typically a pair of spaced apart plastics strips which once they have served their function of guiding the toggle plate into position are then tightened by means of a dependant plastics washer and cut down to size.

A further type of device is disclosed in the applicants co-pending European Patent Application no. 95 308361.5. In a described embodiment, a pair of spaced apart plastics strips similar to those of the second type of device are provided but, in use, the device automatically springs from the closed into the open configuration under action of a resilient biasing means. In this manner, the advantages of the first and second types are combined but the use of guide means is still required.

It is an aim of preferred embodiments of the present invention to provide an anchoring device for blind fixing which does not rely on special two part bolts or external guide means.

According to a first aspect of the invention, there is provided an anchoring device for co-operation with a threaded member for blind fixing to a mounting surface, the device comprising:
an elongate member having a threaded aperture; and
a collar pivotally attached to the elongate member, and adapted to co-operate with the threaded member wherein the anchoring device is configurable into a closed configuration and an open configuration, in which closed configuration the elongate member is substantially parallel to the threaded member to enable the elongate member to be inserted into an aperture in the mounting surface and in which open configuration the elongate member is no longer parallel to the threaded member, the anchoring device being arranged such that in the closed configuration the threaded member engages with the collar, but not with the threaded aperture of the elongate member, passage from the closed configuration to the open configuration being arranged to bring the threaded member and the threaded aperture of the elongate member substantially into alignment and enabling engagement of the threaded member with the aperture.

The anchoring device may include the threaded member or may be supplied separately therefrom.

Pivotal attachment of the collar to the elongate member may be achieved by providing the collar and the elongate member with mutually co-operable locating means which preferably comprises a pair of diametrically opposed lugs and providing the elongate member with a pair of transversely opposed lug locating apertures. Alternatively, the elongate member may be provided with lugs and the collar with lug locating apertures.

The collar may be internally threaded, and in such an arrangement preferably one full turn of thread is provided internally on the collar.

Alternatively, the collar may be provided with one or more inwardly protruding lips for engagement with the threaded member. Two such lips are preferably provided, the two lips being diametrically opposed with respect to the collar. Preferably, the lips and the collar locating means are disposed in such a manner as to enable the collar to co-operate with the threaded member by tilting slightly with respect to the elongate member, one lip engaging one part of the helical thread of the threaded member and the other lip engaging a second, diametrically opposed part of the helical thread of the threaded member, the angle of tilt being determined by the number of turns per centimetre of the thread. By providing two or more separate lips, distributed as above, the lips are able to cooperate better with the helical thread and allow proper alignment of the threaded member with the threaded aperture of the elongate member, whereas, if a single lip extending throughout the full circumference of the collar were provided then at the opposed points on the collar the lip would interfere with the helical thread by either tending to urge the threaded member into a cross-threaded engagement with the aperture of the elongate member in the "open" configuration or causing the lip to be ridden over by the helical thread when the threaded member and threaded aperture of the elongate member are in correct engagement.

Preferably, the collar is further provided with an outwardly extending tab of material which is elastically deformable such that in the closed configuration the tab may be forced to be deformed and to press against the elongate member, so that in the closed configuration there is a tendency for the device to move automatically towards the open configuration substantially independently of device orientation.

In an alternative embodiment, bringing the device from the closed configuration to the open configuration may be achieved by longitudinal displacement of the centre of mass of the elongate member away from the pivotal axis of the collar. In such a case longitudinal displacement of the centre of mass of the elongate member away from the pivotal axis may be achieved by the elongate member being asymmetrical about the pivotal axis, so that under gravity there is a tendency for the anchoring device to move from the closed configuration towards the open configuration.

The threaded member may be a bolt or a stud, or other suitable threaded fixing. Preferably, the threaded member is a standard sized threaded fixing which is readily available separately from the anchoring device.

The anchoring device may further comprise a washer, the washer having an aperture of a greater diameter than that of the threaded member and an outer diameter which is greater than the diameter of the mounting surface aperture.

The device may include a cylindrical bush for aligning the threaded member substantially centrally within the aperture of the mounting surface. The cylindrical bush may be of metal or plastics construction. The bush may be used for transferring forces perpendicular to the axis of the threaded member to the mounting surface. For example, where a baluster is to be attached to a staircase, shear forces on the hand rail may be transferred from hand rail to baluster to staircase in a safe and efficient manner.

When drilling holes in concrete or certain other mounting surface materials spalling of the aperture may occur as material breaks away from the blind exit hole of the aperture. In such cases, the elongate member would, if provided with a completely flat load bearing surface, when the device is open and fully tightened have a very uneven load distribution as all of the loading may be transmitted through only extreme points. In order to overcome this problem, preferred embodiments are provided with a shaped load bearing surface arranged to conform at least partially with the anticipated formation of an exit hole area of the aperture in the mounting surface. Preferably, the load bearing surface comprises a first area for cooperating with generally smooth surfaces and a second area for cooperating with surfaces in which spalling has occurred. The first area may comprise a generally flat load bearing surface substantially parallel to a main extent of the elongate member. Preferably, the load bearing surface of the elongate member comprises a first, generally flat central area adjacent to the threaded aperture for covering the aperture in the mounting surface and cooperating with generally smooth surfaces on the mounting surface "blind side" and preferably also comprises end regions each disposed at acute angles with said flat central area for cooperating with spalled or similar surfaces.

The device may include a removable gauge for gauging ideal placement of a fixing nut when fastening the device in place.

For a better understanding of the invention, and to show how embodiments of the same may be carried into effect, reference will now be made, by way of example, to the accompanying diagrammatic drawings, in which:
Figure 1 is a part-sectional side view of a toggle plate of a first embodiment of the anchoring device;
Figure 2 is a part-sectional end view of the toggle plate of Figure 1 as viewed from "X";
Figure 3 is a part-sectional side view of a collar for use with the toggle plate of Figures 1 and 2;
Figure 4 is a plan view of the collar of Figure 3;
Figure 5 is a plan view of the first embodiment showing an assembled toggle plate and collar;
Figure 6 is a side view of the assembled anchoring device of the first embodiment in the closed configuration;
Figure 7 is a schematic perspective view of the device of Figures 1 to 6;
Figure 8 is a part-sectional side view of a toggle plate of a second embodiment of the anchoring device;
Figure 9 is a part sectional end view of the toggle plate of Figure 8 as viewed from "Y" of Figure 8;
Figure 10 is a part sectional side view of a collar for use with the toggle plate of Figures 8 and 9;
Figure 11 is a plan view of the collar of Figure 10;
Figure 12 is a side view of the collar of Figures 10 and 11 as viewed from "Z" of Figure 10;
Figure 13 is a plan view of an exemplary embodiment of an assembled toggle plate and collar;
Figure 14 is a perspective view showing the second embodiment of the anchoring device in an open configuration;
Figure 15 shows the second embodiment in a closed configuration;
Figure 16 shows the anchoring device of Figure 15 being inserted into a hole in a mounting surface;
Figure 17 and 17A show the device of the second embodiment in an open configuration and show detail of the collar plate in the open configuration respectively;
Figure 18 shows the device of the second embodiment when utilized with a mounting surface in which spalling has occurred, this Figure also shows use of a gauge for determining nut placement;
Figure 19 shows the device of the second embodiment and the use of a nut placement gauge; and
Figures 20A and 20B show a centralizing bush for use with the device.

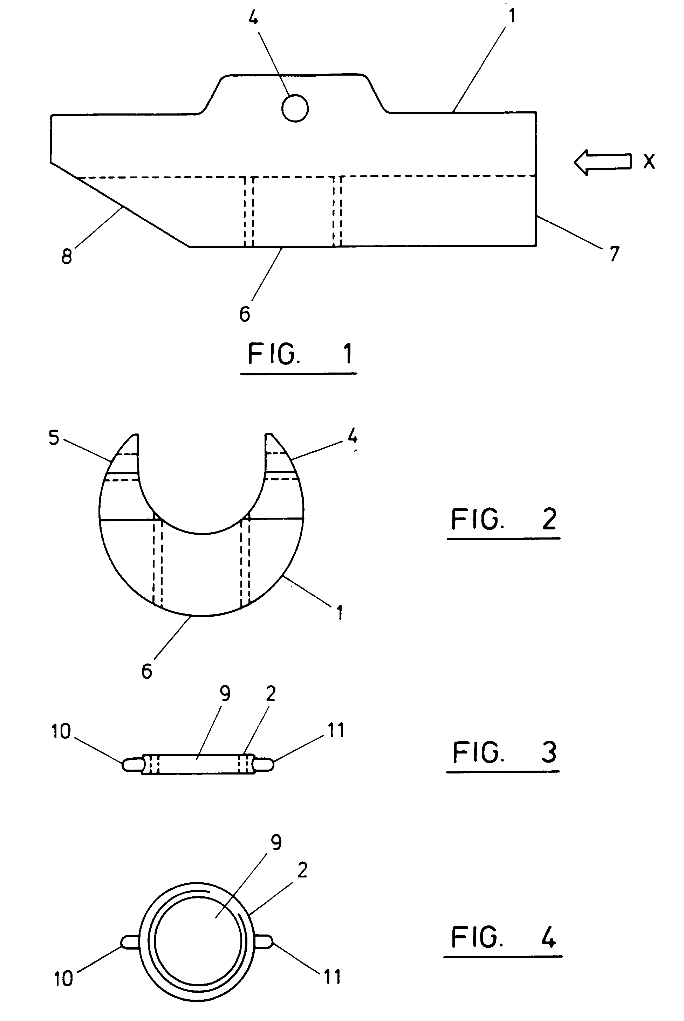

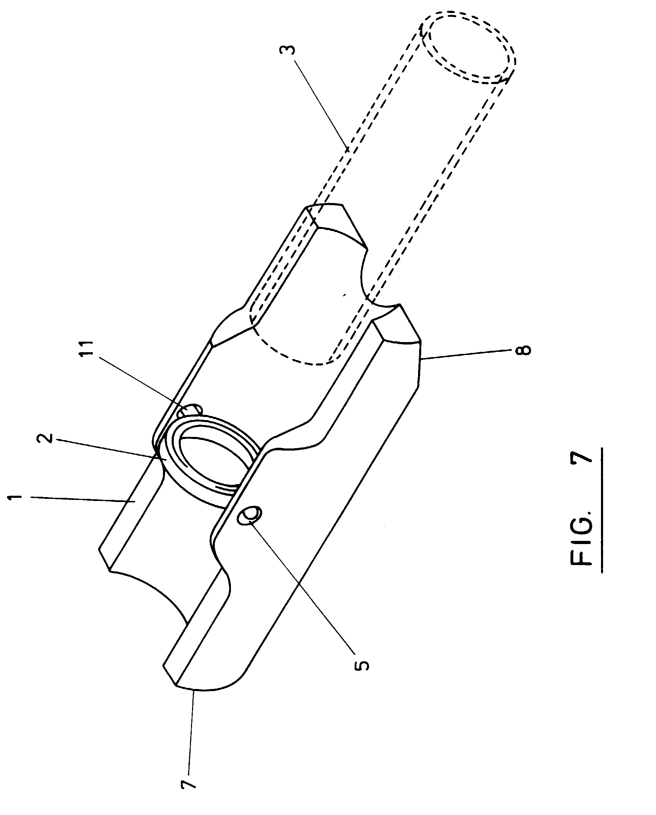

Referring to Figures 1 to 7, a first embodiment of the present invention will now be described.

The anchoring device comprises a toggle plate 1, and collar 2, the anchoring device being arranged to co-operate with a fixing device such as a bolt 3.

Referring to Figures 1 and 2, the toggle plate 1 comprises an elongate member of a generally "U" shaped cross-section. The toggle plate 1 has a pair of opposed transverse apertures 4, 5 formed therein and a threaded aperture 6 formed in a lower region thereof. The threaded aperture 6 is shown by hatched lines in Figures 1 and 2. The toggle plate may have a straight cut end 7 and a bevelled end 8.

Referring now to Figures 3 and 4, a collar 2 is shown, the collar having an internally threaded aperture 9 and a pair of diametrically opposed lugs 10, 11.

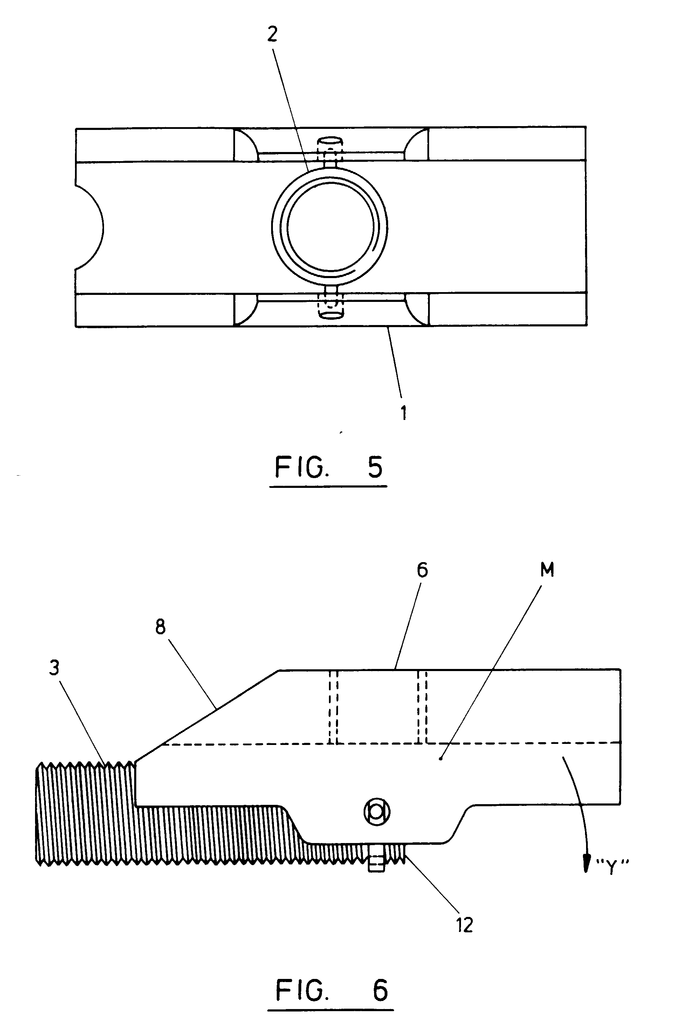

Referring now to Figure 5, which is a perspective view showing cooperation of the toggle plate 1 and collar 2, and to Figure 6, an assembled anchoring device will now be described.

As can be seen from Figure 5, the collar 2 is arranged to cooperate with the toggle plate 1 by means of locating the lugs 10 and 11 in opposing apertures 4 and 5. Location of the lugs 10, 11 in this fashion enables the collar 2 to be able to pivot or rotate.

Use of the anchoring device will now be described.

When it is desired to create a blind fixing through a thin wall or other supporting structure, the first step is to drill a hole in that structure. After drilling a hole of suitable size, the anchoring device is mated with a threaded member 3, such as a bolt, and put into the configuration shown in Figure 6 so that the main extent of the toggle plate is aligned in parallel relation to the threaded member 3. This is enabled by screwing the threaded member into the threaded collar 2 and rotating the toggle plate into the "closed" configuration shown. The anchoring device is then deployed by pushing the toggle plate 1, through the aperture.

Once the whole of the toggle plate 1 has passed through the aperture, because the toggle plate has a bevelled end 8, the centre of mass of the toggle plate 1 will be beyond the pivot points formed by apertures 4 and 5. For ease of illustration, a point "M" is shown on Figure 6, which represents the centre of mass of the toggle plate 1. Due to the positioning of the centre of mass, the toggle plate will tend automatically to attempt to rotate down from its position shown in Figure 6 along arc "Y" of Figure 6. Rotation in direction Y automatically brings the anchoring device into the "open" configuration once the toggle plate 1 has passed through the aperture in the supporting surface.

After completion of the above steps, the anchoring device and threaded member 3 are configured such that the main extent of the member 3 is on the user accessible side of the supporting surface and the toggle plate 1 and collar 2 are on the blind side and in the open configuration. In this open configuration, threaded aperture 6 is aligned with end face 12 of threaded member 3. The threaded member 3 is then screwed into the threaded aperture 6. The object which it is desired to secure to the supporting surface may then be positioned onto the threaded member 3 and a locking device such as a threaded nut used to secure the device and object firmly to the supporting surface.

It will be appreciated that the anchoring device may be used for anchoring many types of objects and structures to one another. For instance, panels of material etc having drilled holes formed therein could be located into a given position by passing the threaded section of bolt 3 through a hole in the panel and then into the collar 2 of the anchoring device. The panel may then be attached to the supporting structure in the manner described.

The anchoring device may be supplied with a suitable sized bolt 3, or on its own. Also, a washer of suitable diameter may be provided with the device for cooperation with a bolt 3, the washer having an external diameter greater than the required aperture of the hole to be formed in the supporting structure.

The device may be made of any suitable material, for instance it may be made of steel or may be made from plastics parts. Whilst the collar 2 is shown as being separate from the toggle plate 1, it may be moulded integrally and have a weakened portion, the weakened portion forming the pivot point for the collar 2.

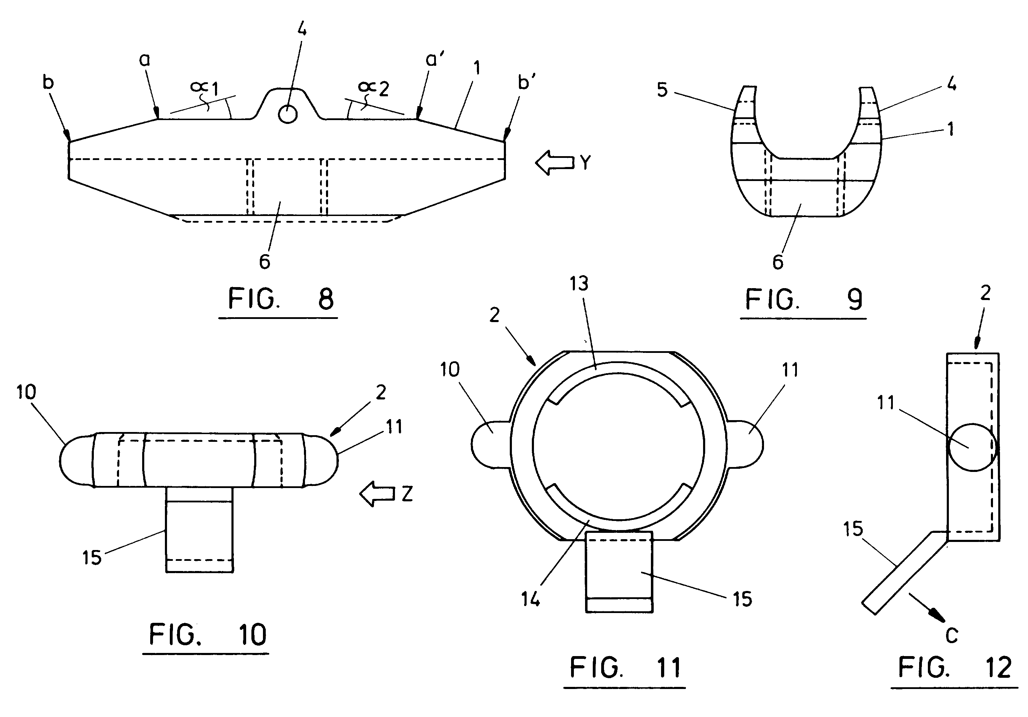

Figures 8 onwards shown an alternative embodiment of an anchoring device in accordance with the present invention. Where features of the device of Figures 8 onwards are identical or similar to those already described in relation to the first embodiment of Figures 1 to 7, like reference numerals are utilised.

Figure 8 and Figure 9 show a toggle plate 1 in accordance with the second embodiment of the device. In common with the toggle plate 1 of the first embodiment, the toggle plate of Figures 8 and 9 features a pair of transversely opposed lug locating apertures 4, 5 for locating a pivoting collar 2 and has a threaded aperture 6 for the reception of an externally threaded member such as a bolt or the like.

In contrast to the toggle plate of the anchoring device of the first embodiment, it will be noted that the toggle plate of Figures 8 and 9 is symmetrical about the central axis of threaded aperture 6. It should also be noted that the toggle plate has a multi-faceted upper surface with a first portion between points "a" and "a'" which is substantially parallel to a main extent of the elongate toggle plate 1 and second and third portions between points "b" and "a" and "a'" and "b'" respectively which are provided at acute angles α₁ and α₂ (α₁ = α₂) with respect to the first portion. Providing these second and third inclined portions helps overcome the problem of "spalling" as will be explained later.

Referring now to Figures 10 to 12, a collar 2 for use with the toggle plate 1 of Figures 8 and 9 will now be described (it should be noted that the Figures are not drawn to scale).

The collar 2 of Figures 10 to 12 features diametrically opposed lugs 10, 11 similar in function to those of the collar 2 of the first embodiment.

Instead of providing the collar 2 with an internally threaded aperture, the second embodiment has a pair of internally protruding lips 13, 14, a centre portion of each of which is disposed substantially at right angles to the lugs 10, 11. The internally protruding lips 13, 14 act to engage with the external thread of a threaded member.

Since the thread of bolts or the like is commonly a helical thread, the lips 13, 14 are not joined so that, with the lips 13, 14 in the same plane they are able to cooperate with diametrically opposed parts of the thread of the threaded member without risk of the threaded member damaging those lips as could otherwise occur in the case of a single circular lip where the helical thread would ride over the single lip at some point on the circumference. It will be appreciated however that when a helically threaded member is inserted into the aperture of the collar 2 of Figures 10 to 12 and thereafter engaged with threaded aperture 6 of the toggle plate 1, the helical nature of the thread will tend to tilt the collar 2 dependent upon the thread pitch (or number of turns per centimetre of the thread).

An advantage of providing lips 13, 14 over that of providing an internally threaded collar is that the collar can be made more inexpensively since tolerances are not so close. In contrast, the collar of the first embodiment requires there to be at least one full turn of thread provided internally for the collar to work effectively.

Another point of difference between the collar 2 of Figures 10 to 12 and that of the first embodiment is that a protruding tab of material 15 is provided. This tab of material 15 acts as a resilient biasing means as the tab 15 is elastically deformable in direction "c" of Figure 12. As will be explained later, the purpose of doing this is to enable the toggle plate 1 of the second embodiment to automatically pass from the closed configuration to the open configuration without requiring the assistance of gravity. Hence, the toggle plate 1 of the second embodiment may be made in a symmetrical fashion as explained in relation to Figures 8 to 10. Providing a symmetrical toggle plate also has the benefits of saving materials since it is not necessary to bias the toggle plate 1 in any particular direction, biasing being carried out automatically by the tab of material 15 of collar 2.

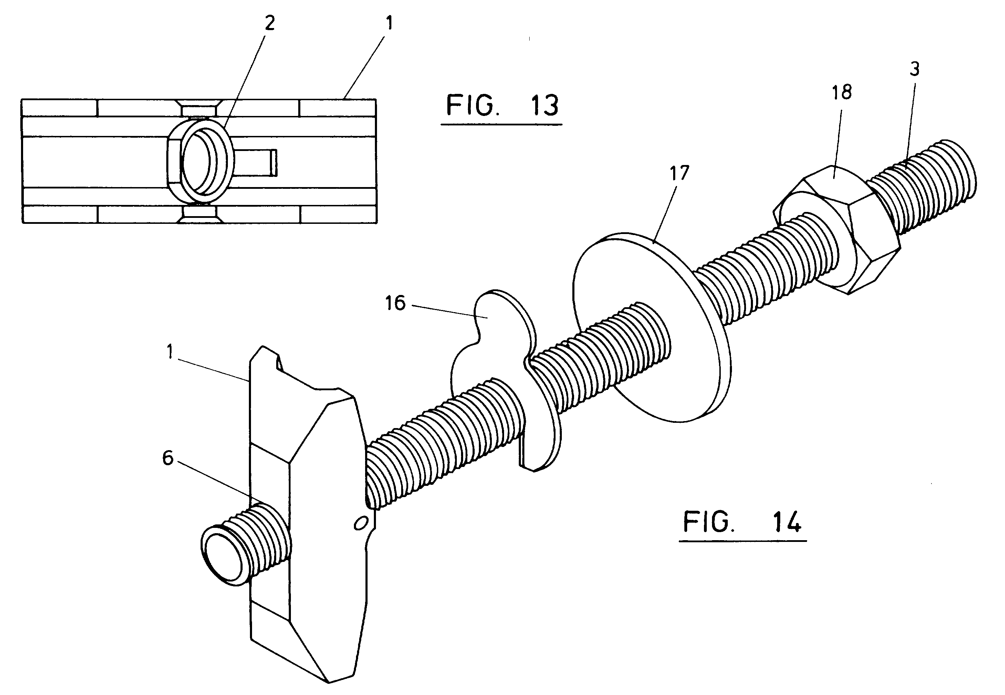

Referring now to Figure 13, an assembled toggle plate 1 and collar 2 of the second embodiment are shown in plan perspective view. In this Figure, for ease of illustration, the collar 2 is shown in a tilted configuration.

Figure 14 shows the second embodiment of the device when utilised in conjunction with a threaded member 3 and various accessories such as a nut alignment gauge 16, a washer 17 and a nut 18.

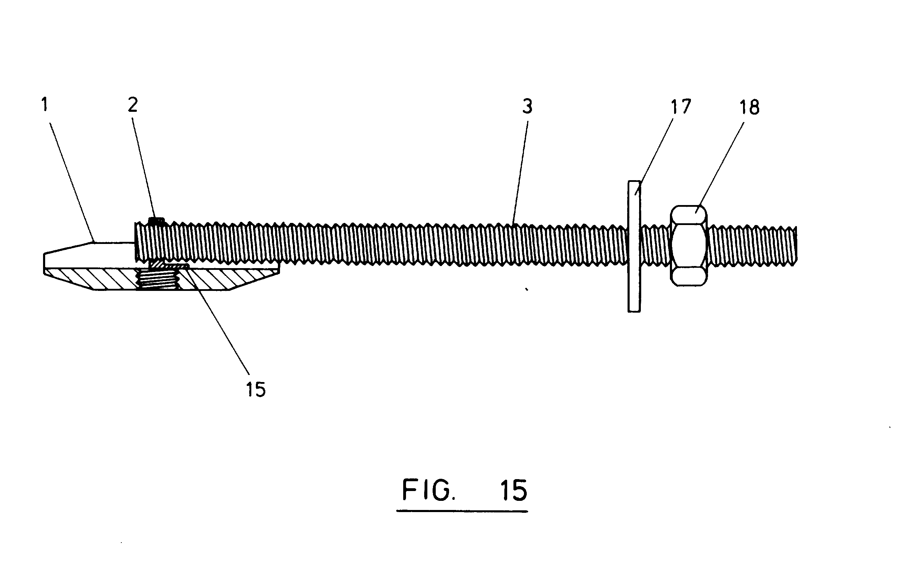

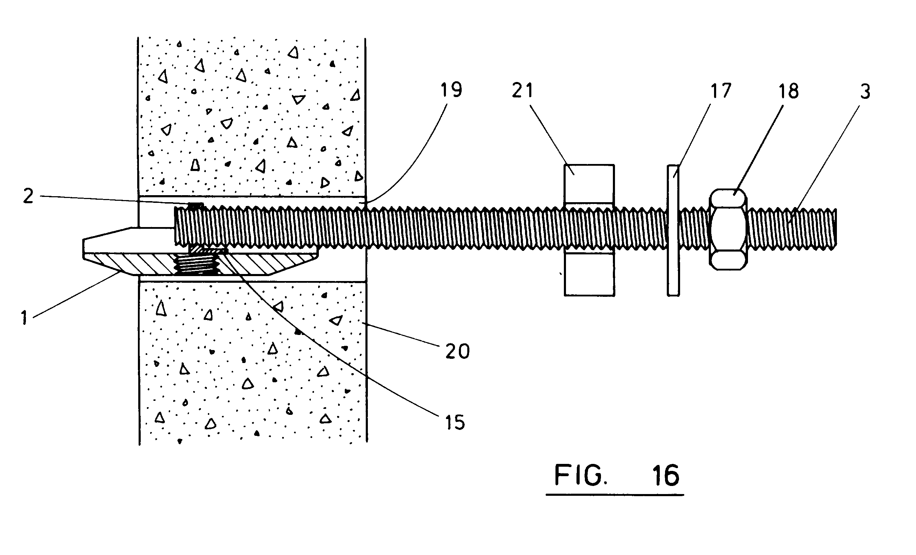

Figures 15 and 16 show the device of Figure 14 in a closed configuration. Of note in these Figures is the fact that in the closed configuration the tab of material 15 is deformed so as to lie parallel with a main extent of the threaded member 3 to enable the device to pass through an aperture 19 provided in a mounting surface 20.

Once the toggle plate 1 has passed through the aperture 19 of the mounting surface 20, tab of material 15 acts as a spring so as to push the toggle plate 1 into the open configuration, regardless of orientation of the device. In such a manner, the anchoring device of the second embodiment does not rely upon gravity in order to bring the device into the open configuration from the closed configuration.

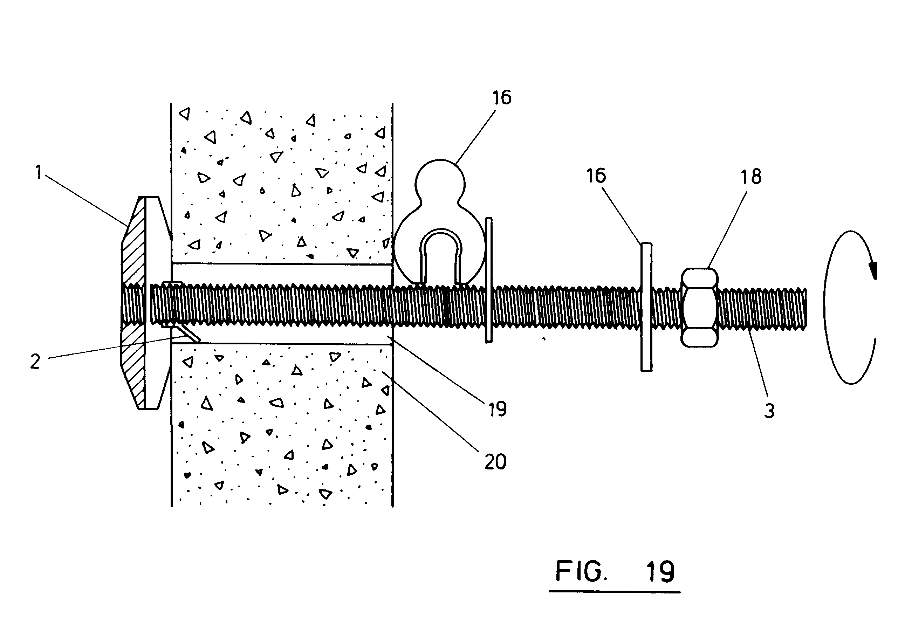

Also of note in Figure 16 is the provision of a bush 21 which is arranged to be a tight fit within aperture 19 of the mounting surface 20. The bush 21 acts to centralise the threaded member within the aperture 19. The bush 21 will be described later in connection with Figures 19A and 19B.

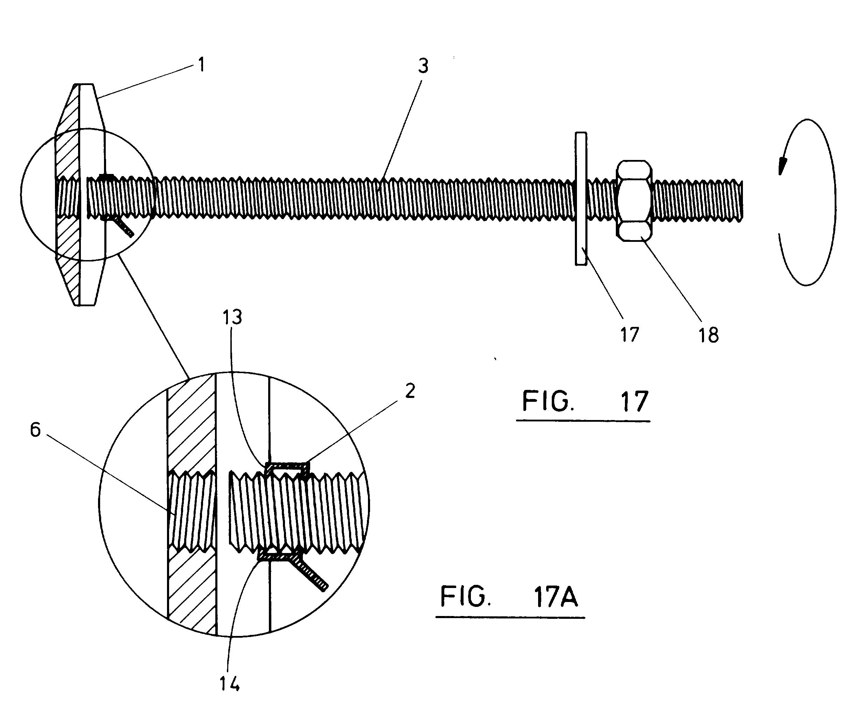

Referring to Figures 17 and 17A, detail of the collar 2 with respect to the toggle plate 1 is shown. In that Figure, it should be noted that, as shown in Figure 17A the collar 2 is allowed to pivot along the pivotal axis of lugs 10, 11 to enable the thread of the threaded member 3 to properly engage both lips 13, 14 and the threaded aperture 6 without causing mis-alignment of the threaded member 3 which could otherwise result in cross-threading of the aperture 6.

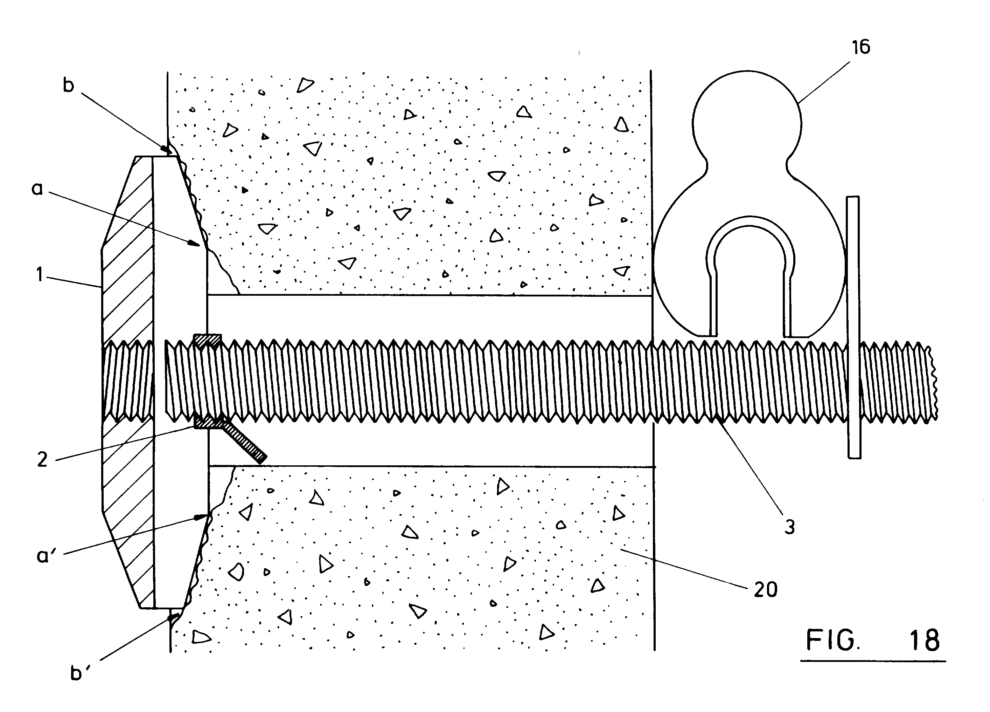

Referring now to Figure 18, utilisation of an anchoring device according to the second embodiment with a material such as concrete is illustrated.

Concrete is prone to spalling. In other words, when a hole is drilled in concrete, there is a danger that material around the exit hole of the drill will break away in the rough fashion shown in this Figure. If a toggle plate 1 having a completely flat upper surface were utilised then when the anchoring device was tightened, all the loading would be transmitted through very few points from the toggle plate 1 of the device to the material 20. In order to avoid this, a multi-angled top surface is preferred so that portions "b" and "a" and "a'" to "b'" which conform to an anticipated spalling profile can be utilised which transmit load in a more even fashion into the material 20. This improves performance of the device when used with material prone to spalling.

To make the device utilisable effectively also with materials which are not prone to spalling, a substantially flat portion extending substantially parallel to the main extent of the toggle plate 1 is provided in region a-a'. In this manner, the device of the second embodiment may also be utilised in an efficient manner with material such as steel, wood etc.

Figure 19 shows utilisation of the gauge 16 for judging nut alignment. Once the toggle plate 1 has been inserted through the hole and the toggle plate positioned at 90° to the threaded member 3, the gauge 16 which is in the form of a plastic "C" clip should be positioned sideways (as shown in the attached diagram) with the double arrowed line in line with the threaded member 3. The width of the clip 16 determines where the clip should thereafter be fastened to the member 3. The threaded member 3 should then be screwed down until the clip is flush with the front of the surface 20 through which the device is being attached and the washer 17 and nut 18 screwed down the member 3 until they sit on the now horizontal clip 16. This process ensures that the threaded member 3 has been fully engaged in the toggle plate 1 eliminating the possibility of the threaded member being screwed only half way through the plate 1.

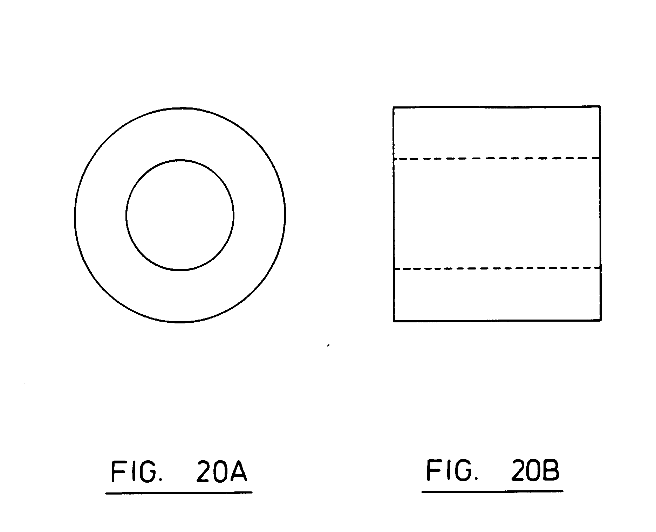

Figures 20A and 20B show a bush 21 such as that shown in Figure 16. The bush is utilised in order to centralise threaded member 3 in aperture 19 and to enable shear forces perpendicular to the threaded member to be efficiently transferred to the mounting surface.

Whilst the first and second embodiments have been described separately, it will be appreciated that features of the second embodiment may be combined with features of the first embodiment and vice versa. For example, the collar 2 of the second embodiment may be utilised with the toggle plate 1 of the first embodiment and, if so, the configuration of the toggle plate 1 of the first embodiment may be altered so as to make it symmetrical.

It will be appreciated by one skilled in the art that other such adaptations and modification are possible without departing from the scope of the invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An anchoring device for cooperation with a threaded member (3) for blind fixing to a mounting surface, the device comprising:
an elongate member (1) having a threaded aperture (6); and
a collar (2) pivotally attached to the elongate member (1), and adapted to cooperate with the threaded member (3) wherein the anchoring device is configurable into a closed configuration and an open configuration, in which closed configuration the elongate member (1) is substantially parallel to the threaded member (3) to enable the elongate member (1) to be inserted into an aperture (19) in the mounting surface (20) and in which open configuration the elongate member (1) is no longer parallel to the threaded member (3), the anchoring device being arranged such that in the closed configuration the threaded member (3) engages with the collar (2), but not with the threaded aperture (6) of the elongate member (1), passage from the closed configuration to the open configuration being arranged to bring the threaded member (3) and the threaded aperture (6) of the elongate member (1) substantially into alignment and enabling engagement of the threaded member (3) with the aperture (6).

2. A device according to claim 1, wherein pivotal attachment of the collar (2) to the elongate member (1) is achieved by providing the collar (2) and the elongate member (1) with mutually cooperable locating means.

3. A device according to claim 1 or 2, wherein the collar (2) is provided with one or more inwardly protruding lips (13, 14) for engagement with the threaded member (3).

4. A device according to claim 3, wherein two such lips (13, 14) are provided, the two lips being diametrically opposed with respect to the collar (2).

5. A device according to any of the preceding claims, wherein the collar (2) is provided with an outwardly extending tab of material (15) which is elastically deformable such that in the closed configuration the tab (15) may be forced to be deformed and to press against the elongate member (1), so that in the closed configuration there is a tendency for the device to move automatically towards the open configuration.

6. Apparatus according to any of claims 1 to 4, wherein the elongate member is asymmetrical about threaded aperture (6) and bringing the device from the closed configuration to the open configuration is achieved under gravity.

7. A device according to any of the preceding claims, wherein the elongate member (1) is provided with a shaped load bearing surface arranged to conform at least partially with the anticipated formation of the exit hole area of the aperture (19) in the mounting surface (20).

8. A device according to claim 7, wherein the load bearing surface comprises a first area (a-a') for cooperating with generally smooth surfaces and a second area (b-a, a'-b') for cooperating with spalled or similar surfaces.

9. A device according to claim 8 wherein the first area comprises a generally flat load bearing surface substantially parallel to the main extent of the elongate member (1) and located substantially centrally with respect to the threaded aperture (6).

10. A device according to claim 8 or 9, wherein the second area comprises end regions of the load bearing surface of the elongate member (1), those end regions each being disposed at acute angles (α₁, α₂) with respect to said central area.
